# EUROPEAN PATENT APPLICATION

(11) **EP 3 450 034 A1**
(43) Date of publication of application: **06.03.2019**
(21) Application number: 18191149.6
(22) Date of filing: 28.08.2018
(51) Int. Cl.: B08B 9/043, B08B 9/045, B21L 3/00, E03F 9/00, B24B 5/40

(54) **A CLEANING DEVICE FOR INTERNAL CLEANING OF DRAIN OR SEWER PIPES**

(30) Priority: 30.08.2017 FI 20175772
(71) Applicant: Boldan Oy, 05200 Rajamäki (FI)
(72) Inventor: KIPPO, Kim, 00750 HELSINKI (FI)
(74) Representative: Berggren Oy, Helsinki & Oulu

(57) **Abstract**

The invention relates to a cleaning device (20) for internal cleaning of drain or sewer pipes (30) comprising at least one chain (25) comprising several chain links (10), two end parts (22), to one of which one end of the chain/chains (25) is/are fastened and to another of which another end of the chain/chains (25) is fastened, which end parts (22) each comprise a central opening (24), through which a rotatable element (27) extends. At least one of the chain links (10) of at least one chain (25) of the cleaning device (20) comprises a blade link (15) connected to one of the chain links (10).

## Description

The invention relates to a cleaning device for the internal cleaning of drain or sewer pipes. More particularly the invention relates to the cleaning device for the cleaning of drain or sewer pipes according to the preamble of the independent cleaning device claim.

It is known that in maintenance and repair work of drain or sewer pipes and in coating of inner surfaces of drain or sewer pipes and in installing renovation liners inside drain or sewer pipes one important part of the work is to clean the inner surfaces of the drain or sewer pipes to remove any material impurity deposits, for example rust, grease, lime, dirt, crusts and scales. Removal of impurities has been accomplished by the use of cleaning devices comprising a tool, for example steel chains attached to a rotatable arm or cable or wire rope or like. Thus the chains are rotated to centrifugally inside the drain or sewer pipe such that at least part of the chain contacts the inner surface of the drain or sewer pipe and thus the impurities are detached and removed from the inner surfaces and flushed away by means of liquid, typically water flow from the drain or sewer pipe. The chains are rotated by a motor or corresponding means. Thus the cleaning internally of the drain or sewer pipes by the cleaning device is accomplished by rotating a tool by means of the wire rope or the equivalent inside the drain. The tool, i.e. the chain or chains of the cleaning device are formed of links connected together as known from common chain structures, for example of snow chains or lifting chains. The chains can also include claws bent from the chain known of snow chains. A problem is that the chains are not particularly sharp and have a limited wear life. By failing to provide sharp edges, the chains tend to be unable to detach all impurities. A problem of the cleaning devices known form prior art is that the cleaning chains are of similar material of their durability as the drain or sewer pipe itself and therefore the cleaning device is not efficient for all cleaning purposes, especially if the impurities have strong adherence to the inner surface of the drain or the sewer pipe. A disadvantage has also been short life time of the chains.

In US patent publication 9649671 is disclosed a cleaning device for the internal cleaning of drainpipes, including one or more chains including several links, and on one or more sides of one or more links is fastened one or more hard metal blades, which are soldered or welded fast to the link. The fastening of the blades to each link of the chain requires a lot of manufacturing work. In some cases, also problems have occurred as the blades have come loose from the link.

An object of the present invention is to provide an improved cleaning device for the internal cleaning of drain or sewer pipes, in which the problems and disadvantages of cleaning devices known from prior art are eliminated or at least minimized.

An object of the invention is to introduce a cleaning device which is effective in cleaning and has a long life time.

An object of the invention is to introduce a cleaning device for the internal cleaning of drain or sewer pipes is quick and cost effective to manufacture.

In order to achieve the above objects and those that will come apparent later the cleaning device according to the invention is characterized by the features of the characterizing part of independent cleaning device claim. Advantageous embodiments and features are defined in dependent claims.

According to the invention the cleaning device for internal cleaning of drain or sewer pipes comprises at least one chain comprising several chain links, two end parts, to one of which one end of the chain/chains is/are fastened and to another of which another end of the chain/chains is fastened, which end parts each comprise a central opening, through which a rotatable element extends, wherein at least one of the chain links of at least one chain of the cleaning device comprises a blade link connected to one of the chain links.

According to an advantageous feature of the invention the cleaning device comprises 1 - 6 chains.

According to an advantageous feature of the invention the blade link has a substantially rectangular outer form having at least one right-angled corner.

According to an advantageous feature of the invention the blade link has a substantially elliptic outer form having at least one right-angled corner.

According to an advantageous feature of the invention the blade link comprises two internal openings through which openings the chain link is correspondingly located.

According to an advantageous feature of the invention the blade link has a thickness and the thickness T is 2 - 10 mm.

According to an advantageous feature of the invention hardness of the hard metal is at least 300 HB.

According to an advantageous feature of the invention at least one of the chains, advantageously all chains, comprises several blade links, each of which is attached to a chain link of the chain, correspondingly.

According to an advantageous feature of the invention beginning at one end of the blade link a cut is formed for forming an opening for attachment of the blade link to the chain link by pressing the by the cut formed parts together at the cut when the blade link is at its place on the chain link.

The invention is applicable in many different types of sewer and drain pipes with various diameters and a cleaning device with many advantages is achieved. Cleaning device for the internal cleaning of drain or sewer pipes according to the invention and its advantageous features is sharp and provides for efficient cleaning due to the blade links attached to the chain links and has a long life time and good durability due to the hard metal material of the blade links. Manufacturing of the chains with the blade links for the cleaning device is work saving and cost effective as there the blade links are easily attached to the chain links and thus there is no need for separate fastening welding of the blades. Also cleaning zone of each chain is wider and more uniform as the whole chain and its blade links provide for the cleaning effect. Further the lifetime will be longer as each blade link has larger wear surface. Additionally, clogging risks of drain and sewer pipes will decrease as the cleaning zone is wider and thus impurities and like on the inner surfaces of the drain and sewer pipes will be more effectively removed.

In the following the invention is described in more detail by reference to the accompanying drawing in which
Fig. 1 shows schematically a simplified example of a cleaning device according to the invention,
Fig. 2A shows schematically a simplified example of a part of a chain of a cleaning device for internal cleaning of drain or sewer pipes according to the invention,
Fig. 2B shows schematically a simplified example of a blade link of a cleaning device for internal cleaning of drain or sewer pipes according to the invention,
Fig. 3 shows schematically a simplified example of a part of a chain with blade links for a cleaning device for internal cleaning of drain or sewer pipes according to the invention,
Fig. 4 shows schematically another simplified example of a blade link of a cleaning device for internal cleaning of drain or sewer pipes according to the invention and
Fig. 5 shows schematically a simplified example of a cleaning device according to the invention in a drain or a sewer pipe.

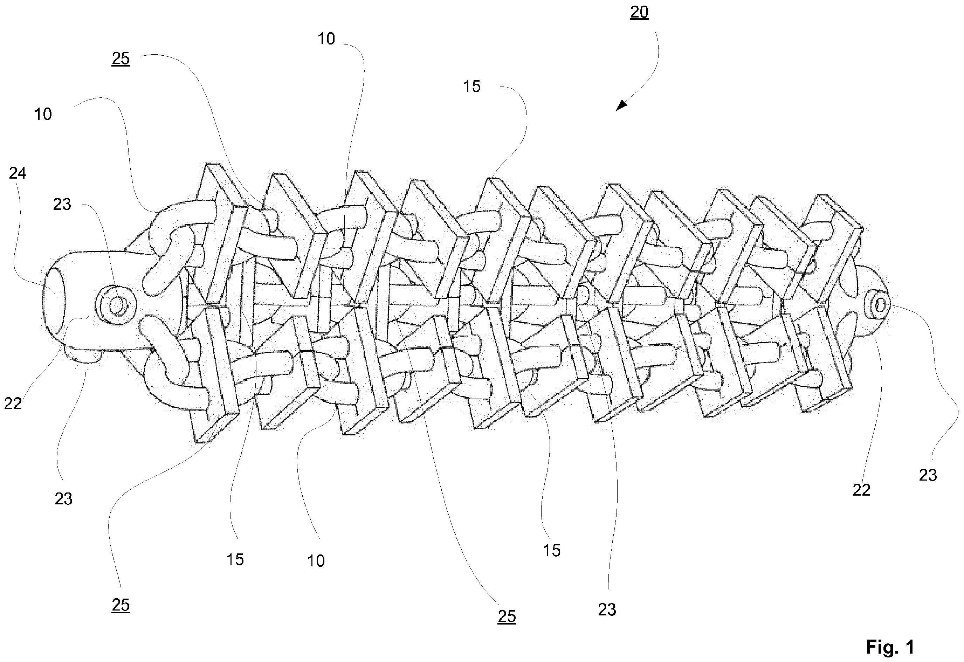

During the course of the following description of the figures 1 - 5 corresponding reference numbers and signs will be used to identify corresponding elements, parts and part components unless otherwise mentioned. In the figures some repetitive reference signs may have not been repeated for clarity reasons.

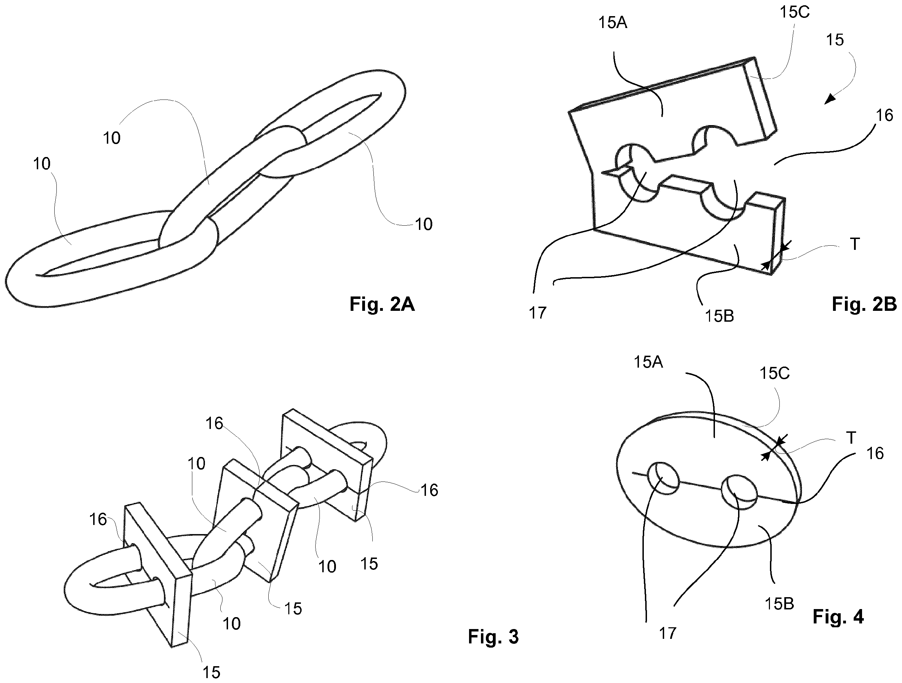

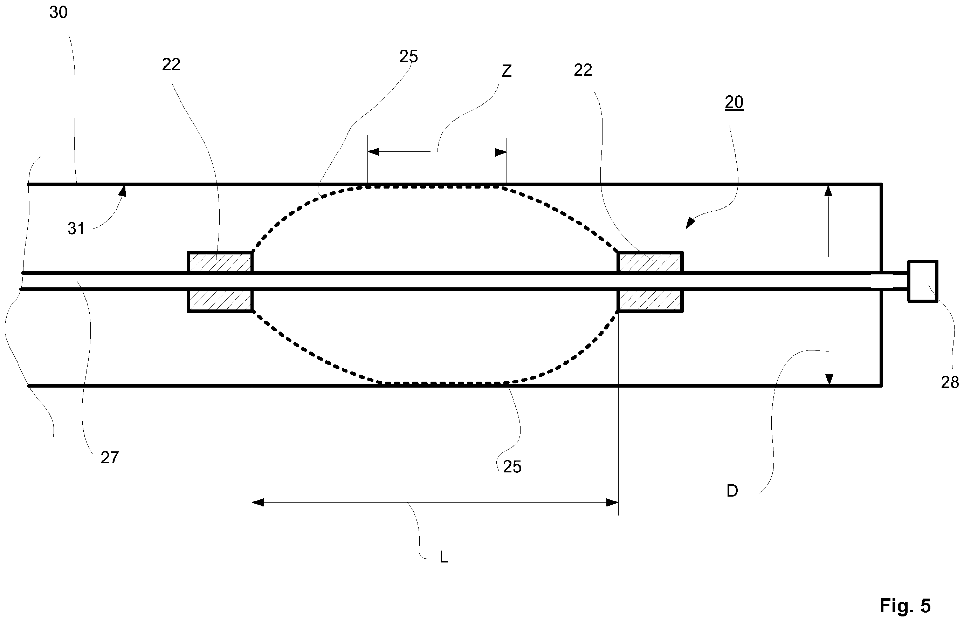

In figure 1 is shown schematically a simplified example of a cleaning device 20 comprising one or more chains 25 formed of several chain links 10. In the example of the figure the cleaning device 20 comprises three chains 25. The cleaning device 20 comprises at least one chain 25. The cleaning device also comprises two end parts 22 in between of which the chains 25 extend and to which end parts 22 respectively ends of each chain 25 are fastened, for example by welding or by screw fastening. The end parts 22 comprise a central through opening 24, through which the rotatable wire rope or rotatable arm or rotatable cable or like rotatable element 27 extends, figure 5. The end part 22 also comprises at least one screw 23 that extends to the through opening 24 for fastening the end part 22 to the desired location on the rotatable element 27 so that the end parts 22 are at required distance L from each other on the rotatable element 27 and that the end part 22 is fastened non-rotatably in the rotatable element 27, figure 5. At least one of the chains 25, advantageously all chains 25, comprise at least one blade link 15, advantageously several blade links 15 that are attached to the chain links 10 of the chain 25, respectively, see also figure 3.

In figure 2A a simplified example of a part of the chain 25, which part comprises three chain links 10 without blade links 15. The chain links 10 have advantageously a substantially elliptic outer form.

In figure 2B is shown schematically a simplified example of a chain link 10 in position for attaching the blade link 15 to a chain link 10 of a chain 25 of the cleaning device 20, figures 1 and 3. In this example the blade link 15 has a substantially rectangular outer form comprising two short sidewalls and two long sidewalls with right-angled corners. The outer form of the blade link 15 comprises at least one right-angled corner, advantageously all corners are right-angled. The inner form of the blade link 15 comprises two openings 17, through which openings 17 the chain link 10 is correspondingly located, figure 3, such that opposite sides of the chain link 10 go through the openings 17 of the blade link 15, correspondingly. The form of the opening 17 is advantageously circular. The blade links 15 are advantageously made by cutting from a hard metal plate, for example by laser cutting, such that the blade link 15 has a thickness T. Thickness T of the blade link 15 is advantageously 2 - 10 mm. The link structure 15 has thus a three dimensional substantially rectangular outer form with cleaning surface 15C of the chain link 15 formed by the thickness T dimension. The cleaning surface 15C circumvents thus around the chain link 15 as outer side surfaces of the rectangular form. Beginning at one end of the rectangular form a cut 16 is formed for forming an opening for attachment of the blade link 15 to the chain link 10, figure 3, by pressing the by the cut 16 formed parts 15A, 15B together at the cut 16 when the blade link 15 is at its place on the chain link 10, to form a substantially continuous blade link 15. The cut 16 extends longitudinally through the rectangular form of the blade link 15 but not all the way such that a one-piece form remains. The blade link 15 will thus be connected to the corresponding chain link 10 by pressing the parts 15A, 15B of the blade link structure against or towards each other at the cut 16 such that the cut 16 will be narrowed such that the cut 16 will not allow the blade link 15 to detach from the chain link 10. The blade link 15 is of hard metal which has advantageously hardness of at least 300 HB.

In figure 3 is shown schematically a simplified example of chain links 10 with connected blade links 15.

In figure 4 is a simplified example of a chain link 10 in closed position i.e. attached to a chain link 10, figure 3, without the corresponding chain link 10. In this example the blade link 15 has a substantially elliptic outer form. The inner form of the blade link 15 comprises two openings 17, through which openings 17 the chain link 10 is correspondingly located, figure 3, such that opposite sides of the chain link 10 go through the openings 17 of the blade link 15, correspondingly. The form of the opening 17 is advantageously circular. The blade links 15 are advantageously made by cutting from a hard metal plate, for example by laser cutting, such that the blade link 15 has a thickness T. Thickness T of the blade link 15 is advantageously 2 - 10 mm. The blade link 15 has thus a three dimensional substantially elliptic outer form with cleaning surface 15C of the chain link 15 formed by the thickness T dimension. The cleaning surface 15C circumvents thus around the chain link 15 as outer side surface of the elliptic form. Beginning at one end of the blade link 15 a cut 16 extending longitudinally through the blade link 15 is formed such that the cut 16 does not extend through the other end all the way and such that an opened structure for attachment of the blade link 15 to the chain link 10 is formed, figure 3, by pressing the by the cut 16 formed parts 15A, 15B together at the cut 16 when the blade link 15 is at its place on the chain link 10, to form a substantially continuous blade link 15. The blade link 15 will thus be connected to the corresponding chain link 10 by pressing the parts 15A, 15B of the blade link structure against or towards each other at the cut 16 such that the cut 16 will be narrowed such that the cut 16 will not allow the blade link 15 to detach from the chain link 10. The blade link 15 is of hard metal which has advantageously hardness of at least 300 HB.

In figure 5 is shown schematically a simplified example of the cleaning device 20 in a drain or a sewer pipe 30. The cleaning device 20 is located inside the pipe 30 such that the chains 25 during rotating the rotatable element 27 contact inner surface 31 of the pipe 30 at cleaning zone Z. The rotatable element 17 is connected to a rotating means 28, for example a rotating motor or rotating drive or pneumatic rotating means. The rotatable element 27 extends through the openings 24, figure 1, of the end parts 22. The end parts 22 are fastened to the desired location on the rotatable by the screws 23, figure 1, so that the end parts 22 are at required distance L from each other on the rotatable element 27, figure 3. The rotatable element 27 is moved in the pipe 30 in its axial direction so that the cleaning zone Z can be moved along the length of the pipe 30. By adjusting the distance L between the end parts 22 the circumferential location of the chains 25 can be adjusted to correspond the inner diameter D of the pipe 30 such that desired cleaning effect and length of the cleaning zone Z is achieved.

The invention is applicable in many different types of drain and sewer pipes of wide range of diameters.

Reference signs used in the drawing
10 chain link
15 blade link
15A, 15B parts of a blade link
15C cleaning surface
16 cut
17 opening
20 cleaning device
22 end part
23 screw
24 opening
25 chain
27 wire rope
28 rotating means
30 pipe
31 inner surface of the pipe
D diameter
T thickness
L distance
Z zone

## Claims

1. A cleaning device (20) for internal cleaning of drain or sewer pipes (30) comprising at least one chain (25) comprising several chain links (10), two end parts (22), to one of which one end of the chain/chains (25) is/are fastened and to another of which another end of the chain/chains (25) is fastened, which end parts (22) each comprise a central opening (24), through which a rotatable element (27) extends, **characterized in that** at least one of the chain links (10) of at least one chain (25) of the cleaning device (20) comprises a blade link (15) connected to one of the chain links (10).

2. Cleaning device according to claim 1, **characterized in that** the cleaning device (20) comprises 1 - 6 chains (25).

3. Cleaning device according to claim 1 or 2, **characterized in that** the blade link (15) has a substantially rectangular outer form having at least one right-angled corner.

4. Cleaning device according to claim 1 or 2, **characterized in that** the blade link (15) has a substantially elliptic outer form having at least one right-angled corner.

5. Cleaning device according to any of claims 1 - 4, **characterized in that** the blade link (15) comprises two internal openings (17) through which openings (17) the chain link (10) is correspondingly located.

6. Cleaning device according to any of previous claims, **characterized in that** the blade link (15) has a thickness (T) and that the thickness T is 2 - 10 mm.

7. Cleaning device according to any of previous claims, **characterized in that** hardness of the hard metal is at least 300 HB.

8. Cleaning device according to any of previous claims, **characterized in that** at least one of the chains (25), advantageously all chains (25), comprises several blade links (15), each of which is attached to a chain link (10) of the chain (25), correspondingly.

9. Cleaning device according to any of previous claims, **characterized in that** beginning at one end of the blade link a cut (16) is formed for forming an opening for attachment of the blade link (15) to the chain link (10) by pressing the by the cut (16) formed parts (15A, 15B) together at the cut (16) when the blade link (15) is at its place on the chain link (10).
